# EUROPEAN PATENT APPLICATION

(11) **EP 1 431 615 A2**
(43) Date of publication of application: **23.06.2004**
(21) Application number: 03253341.6
(22) Date of filing: 28.05.2003
(51) Int. Cl.: F16H 7/08

(54) **Hydraulic tensioner**

(30) Priority: 16.12.2002 JP 2002363571
(71) Applicant: BorgWarner Morse TEC Japan K.K., Nabari, Mie 518-0495 (JP)
(72) Inventor: Seungpyo, Shin, Mie 518-0495 (JP)
(74) Representative: Lerwill, John

(57) **Abstract**

A hydraulic tensioner (1) comprising a housing (2) have a central bore (2a) open at one end and a recess adjoining the bore having an inclined slide surface opposing the bore. A slider (72) within the recess to prevent the travel of the plunger (3) in a backward direction by a wedge-effect, having a first side engaging the rack teeth (3b) of the plunger (3) and a second side sliding along the inclined surface of the recess in a direction crossing the axial centerline of the plunger. The slider (72) being biased in such a way that the slider (72) moves along the inclined slide surface of the recess of the housing in a direction of engagement of the ratchet portion of the slider (72) with the rack teeth (3b) of the plunger (3).

## Description

### FIELD OF THE INVENTION

The invention pertains to the field of tensioners for imparting tension to a chain, belt or the like. More particularly, the invention pertains to a tensioner having a ratchet mechanism, including a slider, to prevent a plunger's retraction when hydraulic pressure is decreased.

### DESCRIPTION OF RELATED ART

A hydraulic tensioner generally includes a housing, a hollow plunger that is fitted slidably into a bore formed in the housing, where the plunger is biased in a protruding direction by a spring, and a fluid chamber defined by the bore of the housing and the plunger. During operation, the force is exerted by a chain or belt on the distal end of the plunger, which balances the elastic force of the spring and hydraulic force in the fluid chamber.

When a force is exerted by a chain on the distal end of a plunger, an inadequate amount of hydraulic pressure is present in the chamber. This force is exerted at the time of engine start. As a result, the plunger is easily forced to retract into the housing, causing noise or oscillation. In order to prevent such a retraction of a plunger, various kinds of hydraulic tensioners with ratchet mechanisms have been proposed, such as shown in Japanese patent application laying-open publication Nos. 2000-136856 and 2001-304360.

The hydraulic tensioner shown in Japanese Publication No. 2000-136856 includes a rack supported translatably in a longitudinal hole formed in a housing, a ratchet fitted slidably in a lateral cavity formed in the housing, a rack which is engaged by the ratchet, and a spring fitted in the cavity, which biases the ratchet in an engaging direction with the rack. The ratchet moves in a the direction perpendicular to the movement of the rack at the time of protrusion of the plunger. One problem associated with this tensioner is that the rack is discrete from the plunger, such that the tensioner has an increased number of components. Additionally, in the case of the chain having a relatively long center distance, there exists a demand for increasing a backlash of a ratchet mechanism in some degree, but the above-mentioned tensioner has a drawback in that the backlash of the ratchet mechanism cannot be enlarged more than the backlash between the rack and the ratchet.

Japanese Publication No. 2001-304360 shows a hydraulic tensioner that includes a rack groove formed on the circumference of a piston. A claw member is adapted to engage the rack groove and slidably fits in a lateral hole. The lateral hole extends in a direction that crosses the axial centerline of the piston in the housing, via a predetermined clearance with an inside wall surface of the lateral hole. The tensioner also includes a spring that fits in the lateral hole that biases the claw member in the engagement direction with the rack. The claw member moves in the direction diagonal to the movement of the rack teeth at the time of protrusion of the piston. However, the amount of movement of the claw member does not fully contribute to the increase of the backlash. In this tensioner, it may be possible to enlarge the backlash of the ratchet mechanism more than the backlash present between the rack groove and the claw member by providing a predetermined clearance between the claw member and the inside wall surface of the lateral hole. However, increasing the backlash may cause chattering due to too great a clearance between the claw member and the lateral hole. Thus increasing the amount of clearance does not increase the backlash of the ratchet mechanism an adequate amount.

The present invention provides a hydraulic tensioner with a ratchet mechanism, that can reduce the number of components, ensure an adequate backlash, securely prevent a plunger's retraction, and address the above problems found in the prior art.

### SUMMARY OF THE INVENTION

A hydraulic tensioner according to one aspect of the present invention comprises a housing having a central bore that opens at one end thereof, a hollow plunger slidably received in the bore of the housing, the plunger having an inside space that defines a fluid chamber with the bore and rack teeth that are formed at least at a portion of the outer circumference of the plunger. The rack teeth formed on the outer circumference of the plunger eliminate the need to provide a separate rack member and plunger, thereby reducing the number of components of the tensioner. The rearmost end of the rack teeth of the plunger is formed with a stop surface adapted to contact the rear end of the ratchet portion of the slider, such that the slider is sandwiched with the front facing wall at the time of the maximum extension of the plunger preventing the plunger from falling out of the tensioner.

The rearmost end of the rack teeth of the plunger formed with a stop surface is also adapted to contact a rear end of the ratchet portion of the slider and to sandwich the ratchet portion with the plug member at the time of the maximum extension of the plunger so as to prevent the plunger from falling out of the tensioner. Thereby, prevention of fall-off of the plunger can be realized with a simple structure.

The tensioner further includes a first biasing member that biases the plunger in a protruding direction, a wedge-shaped slider adapted to permit travel of the plunger in the protruding direction but to prevent travel of the plunger in a backward direction by developing a "wedge-effect" at the time of retraction of the plunger, and a second biasing member that biases the slider in a direction of engagement of the ratchet portion with the rack teeth. The slider has a ratchet portion engageable with the rack teeth of the plunger on a first side surface. The slider is slidable in a direction intersecting an axial centerline of the plunger along an inclined surface formed on a second side surface opposite the first side surface.

The housing has a supporting block formed with a slider housing portion, the slider housing portion has an inclined slide surface that the inclined surface of the slider slidably contacts, and a second biasing member biases the slider in such a way that the slider moves along the inclined slide surface. The slider housing portion has a stop surface adapted to contact a rear side surface of the slider to block travel of the slider in a backward direction. Thereby, the movement of the slider, and thus the plunger during retraction of the plunger can be securely prevented. The slider housing portion also has a front facing wall oppositely disposed to a front side surface of the slider, and one end of the second biasing member contacts the front facing wall and the other end thereof contacts the front side surface of the slider. At the time of movement of the slider, the slider is guided by the inclined slide surface formed in the slider housing portion of the supporting block under the action of the force of the second biasing member, thus making the movement of the slider smoothly.

The second biasing member may be a coil spring where the axial centerline is disposed parallel to the inclined side surface of the slider housing portion. In this case, the biasing force of the coil spring can be transmitted to the slider without any loss of contact between the inclined surface of the slider and the slide surface of the supporting block maintained. Thereby, the slider and the second biasing member are integrated and housed inside the supporting block, thus facilitating assembly of the tensioner.

When the plunger travels in the protruding direction during operation of the tensioner, the slider slides along the inclined surface through engagement between the rack teeth of the plunger and the ratchet portion of the slider, thereby increasing the whole backlash, correspondingly to the amount of sliding movement, allowing an adequate backlash to be secured. The plunger is prevented from retracting by a "wedge-effect," which is present at the time of backward movement of the plunger by a wedge shaped slider.

The housing further comprises a first through hole adapted to insert a disengaging pin thereinto between the rear side surface of the slider and the rear stop surface of the slider housing portion in order to disengage engagement of the ratchet portion of the slider with the rack teeth of the plunger. Also, the housing has a second through hole adapted to insert a retaining pin thereinto between the front side surface of the slider and the front facing wall of the slider housing portion in order to retain the plunger in a retracted state. Engagement of the slider with the rack teeth of the plunger can be easily disengaged by inserting the disengaging pin into the first through hole. By this disengagement, a worker can easily push the plunger into the housing before transportation of the tensioner. Then, from this condition, by inserting the retaining pin into the second through hole, the retracted condition of the plunger can be maintained with ease, thereby facilitating assembly of the tensioner into a chain. Additionally, after assembly into the chain, the tensioner is placed in an operatable state by removing the retaining pin.

The disengaging pin and the retaining pin are preferably the same pin with a tapped distal end. In this case, insertion of the pin into a clearance between the rear end surface of the slider and the stop surface of the slider housing portion, and into a clearance between the front end surface of the slider and the wall surface of the slider housing portion can be conducted with ease. Also, the use of only one pin as a disengaging pin and a retaining pin decreases the number of components.

A check valve may be provided at a bottom portion of the central bore of the housing to permit fluid flow into the chamber but to block reverse flow of fluid, thereby, securely preventing the retraction of the plunger.

The housing may also have a recess that adjoins and intersects the bore. The recess has an inclined slide surface that is slidably adapted to contact the inclined surface of the slider. The recess has a pair of flat surfaces oppositely disposed to each other on opposite sides of the slide surface, and opposite side surfaces of the slider is slidably supported by each of the flat surfaces of the recess. In this case, at the time of travel of the slider, the slider is laterally guided in the recess by each of the flat surfaces, thereby preventing lateral swinging movement of the slider. As a result, engagement of the ratchet portion of the slider with the rack teeth of the plunger can be securely maintained.

At the back of the slide surface of the recess is formed a stop surface adapted to contact the rear end surface of the slider to block travel of the slider in a backward direction, thereby, securely preventing the travel of the slider, and thus, the plunger at the time of retraction of the plunger.

In front of the slide surface of the recess is provided a plug member opposed to a front end surface of the slider. One end of the second biasing member is engaged with the plug member and the other end of the second biasing member is engaged with the front end surface of the slider.

The second biasing member biases the slider in such a way that the slider moves along the slide surface of the recess. In this case, at the time of movement of the slider, the slider is guided under the force of the second biasing member by the inclined slide surface of the recess in the housing, thereby allowing for a smooth movement of the slider. Furthermore, in this case, a supporting block does not need to be provided in order to support the slider, thereby simplifying the structure. The second biasing member is a coil spring and an axial centerline of the coil spring is disposed parallel to the slide surface of the recess. Thereby, force of the coil spring can be transmitted to the slider without any loss with contact between the inclined surface of the slider and the slide surface of the recess maintained.

### BRIEF DESCRIPTION OF THE DRAWING

- FIG. 1: is a longitudinal sectional view of a hydraulic tensioner according to an embodiment of the present invention.
- FIG. 2: is an enlarged view of a ratchet mechanism of the hydraulic tensioner in Figure 1.
- FIG. 3: is a schematic illustrating a ratchet mechanism and a disengaging pin.
- FIG. 4: is a schematic illustrating a ratchet mechanism and a retaining pin.
- FIG. 5: is a schematic illustrating operation of the ratchet mechanism at the time of protrusion of the plunger.
- FIG. 6: is a schematic illustrating operation of the ratchet mechanism at the time of protrusion of the plunger.
- FIG. 7: is a schematic illustrating operation of the ratchet mechanism at the time of protrusion of the plunger.
- FIG. 8: is a schematic illustrating operation of the ratchet mechanism at the time of protrusion of the plunger.
- FIG. 9: is a schematic illustrating operation of the ratchet mechanism at the time of protrusion of the plunger.
- FIG. 10: is a schematic illustrating operation of the ratchet mechanism at the time of retraction of the plunger.
- FIG. 11: is an enlarged view of a ratchet mechanism of the hydraulic tensioner according to an alternative embodiment of the present invention.
- FIG. 12: is a cross sectional view of Figure 11 taken along line XII-XII.
- FIG. 13: is a schematic illustrating operation of the ratchet mechanism at the time of the maximum extension of the plunger.

### DETAILED DESCRIPTION OF THE INVENTION

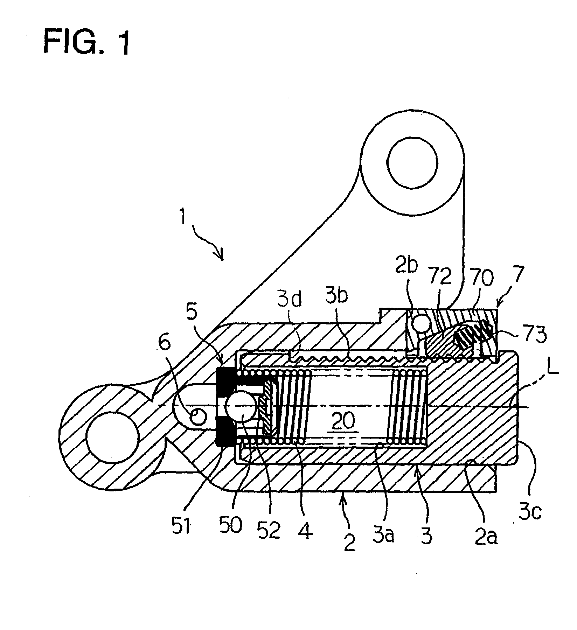

As shown in Figure 1, a hydraulic tensioner 1 includes a housing 2, a hollow plunger 3 fitted slidably in a bore 2a formed in the housing 2, and a spring 4 as a first biasing member that biases the hollow plunger 3 in a protruding direction from the bore 2.

In the housing 2, a fluid chamber 20 is formed by an inner space 3a formed in the plunger 3 and an inside wall surface of the bore 2a. A check valve 5 is provided at the bottom portion of the bore 2a in the housing 2 to permit the flow of fluid into the chamber 20 but to block fluid flow in a reverse direction. The check valve 5 is comprised of a ball 50, a ball seat 51 contacted by the ball 50, and a ball spring 52 biasing the ball 50 toward the ball seat 51. Any other suitable structure can be employed to form a check valve. The housing 2 also has a fluid passage 6 to connect the chamber 20 with an outer source of pressurized fluid (not shown).

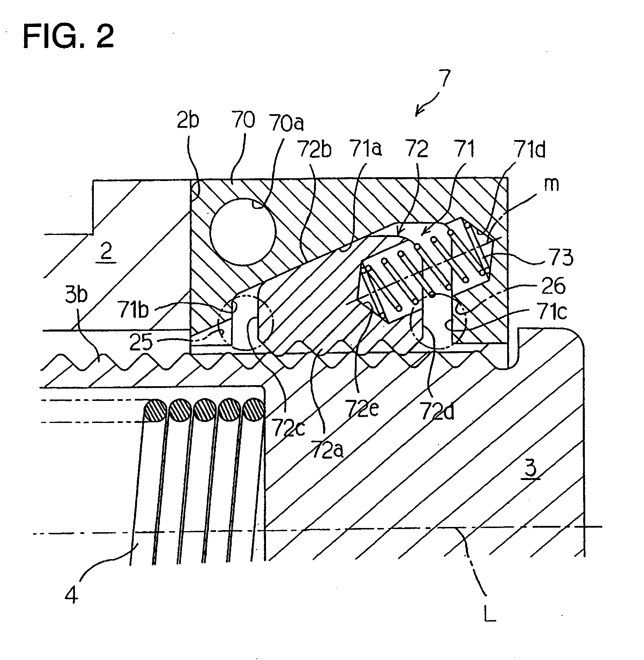

Rack teeth 3b are formed on a portion of the outer circumference of the plunger 3. A ratchet mechanism 7 is provided at an open portion of the bore 2a to prevent retraction of the plunger 3. The ratchet mechanism 7, shown in Figure 2, is comprised of a supporting block 70 that is disposed in a notch portion 2b formed at the open portion of the bore 2a, a wedge-shaped slider 72 is disposed in a slider housing portion 71 concavely formed in the supporting block 70 where the ratchet portion 72a is engagable with the rack teeth 3b of the plunger 3 on a first side surface, and a spring 73 as a second biasing member biases the slider 72 in such a way that the ratchet portion 72a of the slider 72 engages with the rack teeth 3b.

The supporting block 70 has a through hole 70a to insert a bolt (not shown) thereinto, and is fixed in the notch portion 2b of the housing 2 via the bolt. The slider 72 has an inclined surface 72b at a second side surface opposite the first side surface containing the ratchet portion 72a. The slider housing portion 71 has an inclined slide surface 71a that the inclined surface 72b of the slider 72 slidably contacts. The slide surface 71 a extends in a direction that intersects the axial centerline L of the plunger 3. The distance between the slide surface 71a and the axial centerline L of the plunger 3 gradually decreases as it goes toward the rearward direction of the plunger 3 (i.e. lefthand direction of Figure 2). The angle between the slide surface 71a and the axial centerline L of the plunger 3 is preferably 45 degrees or less. In this embodiment, the angle is predetermined to be about 30 degrees to ensure an adequate backlash in the ratchet mechanism 7.

The slider 72 has a rear end surface 72c and a front end surface 72d oppositely disposed between the first and second side surfaces. The slider housing portion 71 has a stop surface 71b disposed opposite the rear end surface 72c of the slider 72 and is adapted to prevent the movement of the slider 72 by contacting the rear end surface 72c of the slider 72 at the time of retraction of the plunger 3. The slider housing portion 71 also has a wall surface 71 c contraposed to the front end surface 72d of the slider 72. Formed on the front end surface 72d of the slider 72, one end of the spring 73 engages with a concave portion 72e and the other end thereof engages with a concave portion 71d formed on the wall surface 71c. In this embodiment, a coil spring is preferably employed as the spring 73. An axial centerline m of the spring 73 is preferably disposed parallel to the slide surface 71a of the slider housing portion 71, so that contact of the inclined surface 72b of the slider 72 with the slide surface 71a may be maintained and the force of the spring 73 transmitted to the slider 72 without any loss.

The ratchet mechanism 7 permits the travel of the plunger 3 in the protruding direction (i.e. righthand direction of Figure 2), and prevents the retraction of the plunger 3 by developing a "wedge-effect" between the slider housing portion 71 and the outer circumference of the plunger 3 at the time of retraction of the plunger 3. Due to the integration of the slider 72 and the spring 73 into the supporting block 70, the assembly of the tensioner is conducted with ease.

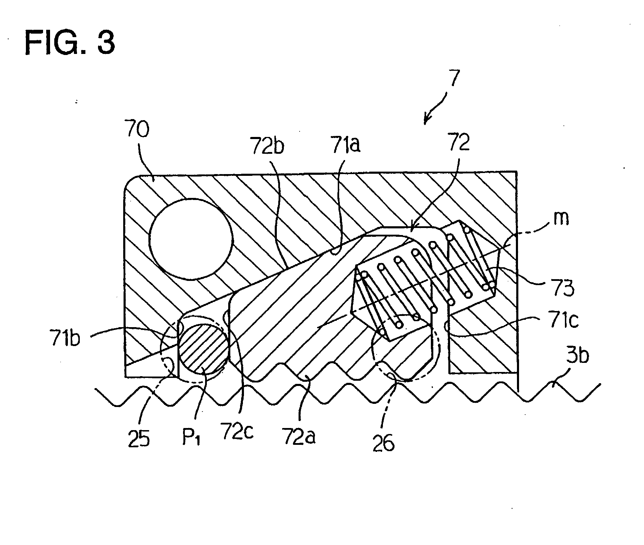

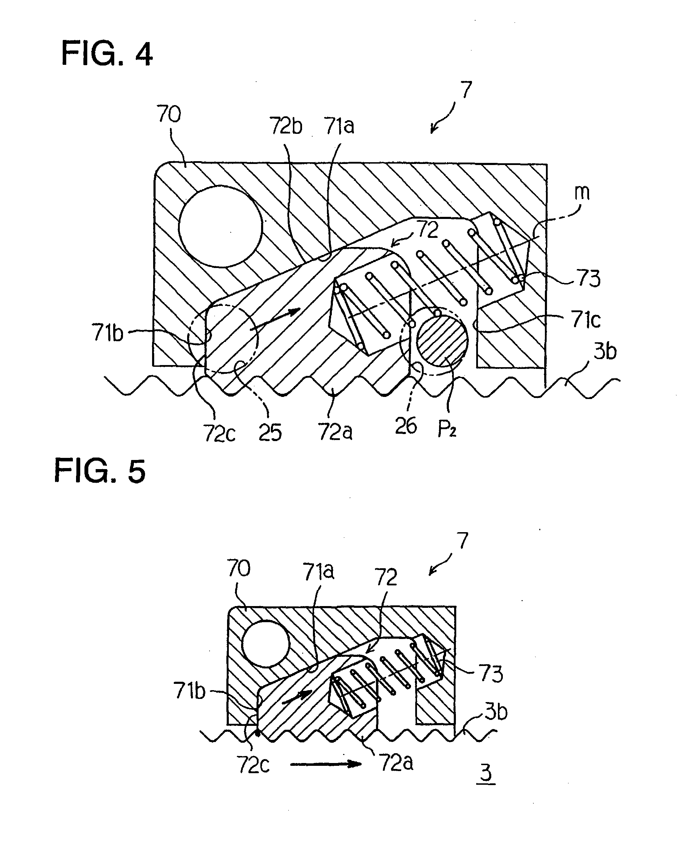

The housing 2 has a first and second through hole 25, 26 formed therein to penetrate the outer circumference of the housing 2 in a direction perpendicular to the axial direction (i.e. a direction perpendicular to the page). The first through hole 25 is disposed on the rear end side of the slider housing portion 71 and the second through hole 26 is disposed on the front end side of the slider housing portion 71. As shown in Figure 3, the first through hole 25 is a hole adapted to insert a disengaging pin 10 thereinto to disengage the engagement present between the ratchet portion 72a of the slider 72 and the rack teeth 3b of the plunger 3. The second through hole 26, shown in Figure 4, is a hole adapted to insert a retaining pin 11 thereinto to maintain the plunger 3 in a retracted state. Both the disengaging pin 10 and the retaining pin 11 have tapered distal ends. In addition, a single, common pin may be provided for the disengaging pin 10 and the retaining pin 11, thus reducing the number of components of the tensioner 1.

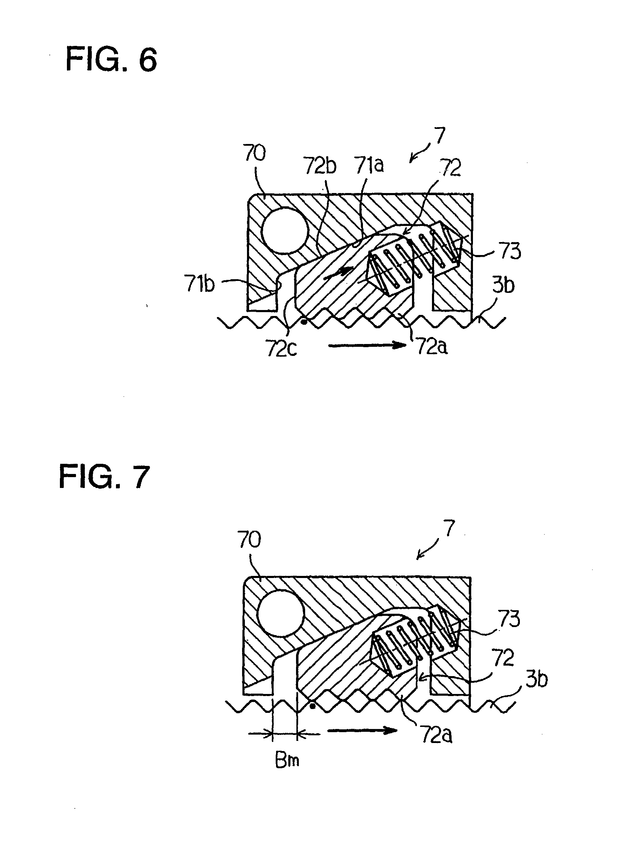

When the engine starts, engine oil is supplied in the fluid chamber 20 of the housing 2 through the check valve 5 from the oil passage 6. When the engine oil fills the chamber 20, hydraulic pressure of the oil causes the plunger 3 to move in a protruding direction. As the plunger 3 starts to move in the protruding direction from the engaging state of the rack teeth 3b of the plunger 3 with the ratchet portion 72a of the slider 72, shown in Figure 5, the slider 72 starts to travel, in the direction marked by the arrow, against the force of the spring 73 through the engagement of the ratchet portion 72a with the rack teeth 3b along the slide surface 71a of the supporting block 70. In Figures 5 and 6-10, a dot is marked on a portion of the rack teeth 3b of the plunger 3 for the purpose of visualizing the movement of the plunger 3. As the slider 72 moves, shown in Figure. 6, the ratchet portion 72a of the slider 72 starts to ride on the rack teeth 3b of the plunger 3. When the slider 72 further travels in accordance with the movement of the plunger 3, as shown in Figure 7, the ratchet portion 72a of the slider 72 rides on the tip of the rack teeth 3b of the plunger 3. At this time, a clearance Bm between the rear end surface 72c of the slider 72 and the stop surface 71b of the supporting block 70 is the maximum backlash of the ratchet mechanism 7. During operation of the tensioner, the slider 72 travels within the range of the maximum backlash Bm.

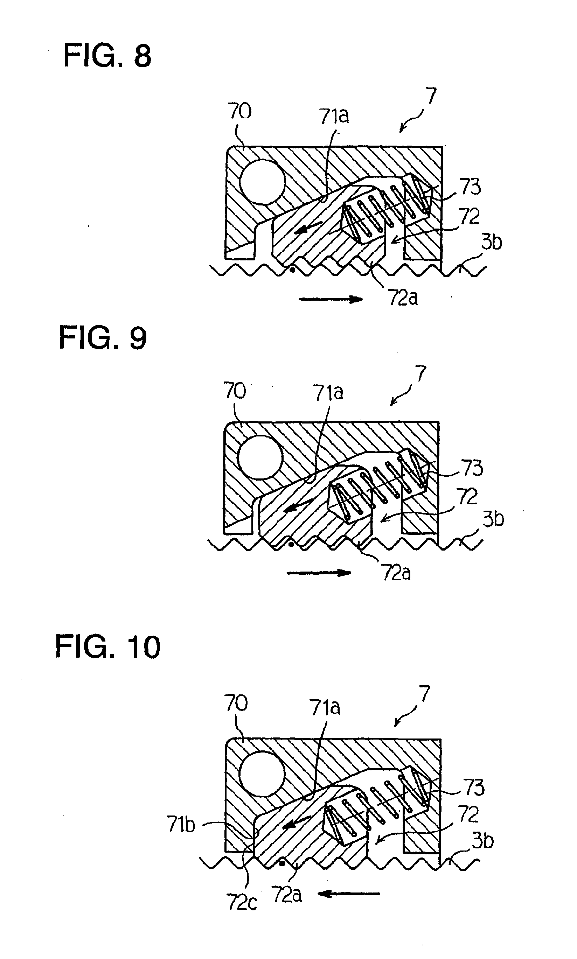

When the plunger 3 travels further in the protruding direction from the state shown in Figure 7, the rack teeth 3b of the plunger 3 pass over the crest of the teeth of the ratchet portion 72a of the slider 72, as shown in Figure 8. Then, the slider 72 begins to travel in a reverse direction or in the direction marked by the arrow in Figure 8, along the slide surface 71a of the supporting block 71 by an elastic force of the spring 73. Thereafter, shown in Figure 9, the slider 72 stops traveling when the teeth of the ratchet portion 72a of the slider 72 engages the rack teeth 3b of the plunger 3. In the case of further movement of the plunger 3 in the protruding direction, the action shown in Figures 6-9 is conducted repeatedly. At the time of maximum extension of plunger 3, a stop surface 3d (shown in Figure 1) is formed at the rearmost end of rack teeth 3b of plunger 3 contacts the rear end of the ratchet portion 72a of the slider 72 and sandwiches slider 72 with the wall surface 71c of the slider housing portion. The plunger 3 is restrained from further movement in a protruding direction and thus plunger 3 is prevented from falling out of the tensioner.

When tension in the chain increases and a compressive force acts upon the distal end portion 3c by the chain, the ball check valve 6 closes and hydraulic pressure in the chamber 20 is imparted upon the plunger 3 as a resistant force, thereby preventing the backward movement of the plunger 3.

At the time of backward movement of the plunger 3, shown in Figure 10, the slider 72 travels in the backward direction of the plunger 3 along the slide surface 71 a of the supporting block 70 through engagement between the rack teeth 3b of the plunger 3 and the ratchet portion 72a of the slider 72. Thus, the wedge-shaped slider 72 develops a "wedge effect" between the plunger 3 and the slide surface 71a of the slider housing portion 71 of the supporting block, thereby preventing the rearward movement of the plunger 3 securely.

During the operation of the tensioner 1, since the slider 72 travels along the inclined slide surface 71a of the supporting block 70, the slider 72 travels within the range of the maximum backlash Bm, which is greater than a backlash between the ratchet portion and the rack teeth 3b. Thereby, the amount of the backlash of the whole ratchet mechanism can be increased and adequate backlash can be secured.

In the case of inadequate fluid pressure in the chamber 20, such as at the engine start, a compressive force is applied to the distal end portion 3c of the plunger 3 from the chain, similarly, the wedge-shaped slider 72 develops the "wedge-effect" between the plunger 3 and the slide surface 71a of the slider housing portion 71 of the supporting block 70 and the rear end surface 72c of the slider 72 contacts the stop surface 71b of the supporting block 70, shown in Figure 10. Thereby, the movement of the slider 72 is prevented and the retraction of the plunger 3 can be securely prevented.

In the case of the retracted state of the plunger 3 with the plunger 3 disengaged from the slider 72, such as at the time of transportation or installation of the tensioner, as shown in Figure 3, a disengaging pin 10 is inserted into the first through hole 25 formed in the housing 2. Thus, the rear end surface 72c of the slider 72 and the stop surface 71b of the slider housing portion 71 are separated, and the engagement between the ratchet portion 72a of the slider 72 and the rack teeth 3b of the plunger 3 is disengaged. From this condition, by pushing the plunger 3 into the housing, the plunger 3 may be placed in a retracted state with ease. With the distal end portion 3c of the plunger 3 pressed so as not to protrude the plunger 3, the disengaging pin 10 is extracted from the first through hole 25 and the retaining pin 11 is inserted into the second through hole 26 formed in the housing, as shown in Figure 4. Thereby, the ratchet portion 72a of the slider 72 and the rack teeth 3b of the plunger 3 are re-engaged, thus maintaining the retracted state of the plunger 3. After the tensioner is fitted to the chain, the tensioner is placed in an operatable condition by extracting the retaining pin 11 from the second through hole 26.

According to the present invention, the rack teeth 3b are formed around the outer circumference of the plunger 3, thus eliminating the necessity for providing a rack member aside from the plunger 3, which reduces the number of components. Also, since the slider 72 travels along the inclined slide surface 71a of the slide housing portion 71 a, a sufficient backlash for the whole ratchet mechanism may be acquired. Moreover, since the wedge-shaped slider 72 develops a "wedge-effect" between the slide surface 71a and the plunger 3 at the time of retraction of the plunger 3, the retraction of the plunger 3 may be securely prevented.

After the tensioner is fitted to the chain, the tensioner is placed in an operatable condition by extracting the retaining pin 11 from the second through hole 26 to cause the plunger 3 and the slider 72 to protrude by the force of the spring 4.

In an alternative embodiment of the present invention, the rack teeth 3b are formed around the outer circumference of the plunger 3, thus eliminating the necessity for providing a rack member aside from the plunger 3, and reducing the number of components. Also, the slider 72 travels along the inclined slide surface 71a of the slider housing portion 71, a sufficient backlash for the whole ratchet mechanism can be acquired. Moreover, since the wedge-shaped slider 72 develops a wedge-effect between the slide surface 71a and the plunger 3 at the time of retraction of the plunger 3, the retraction of the plunger 3 can be securely prevented.

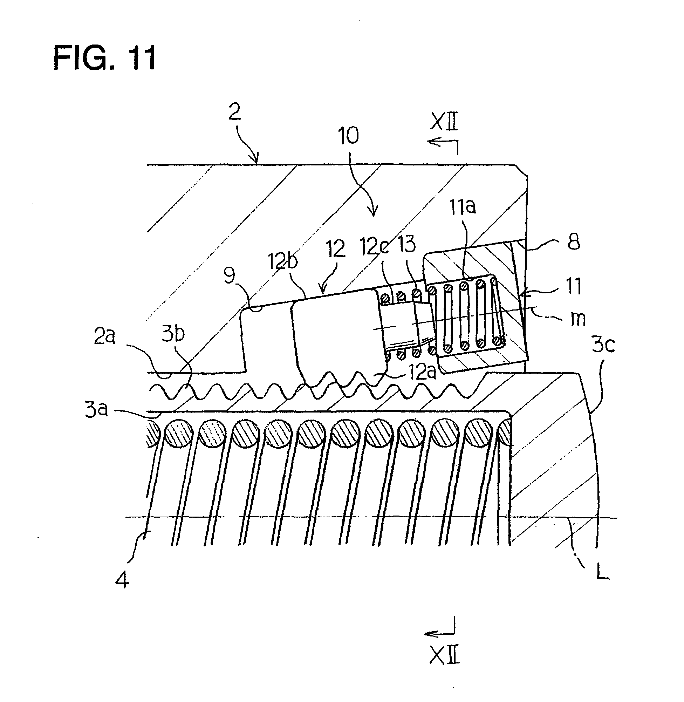

In the above-mentioned embodiment, a ratchet mechanism is disposed in the slider housing portion of the supporting block that is provided discretely from the housing. The application of the present invention is not limited to this example. A ratchet mechanism may be provided directly in the housing, as shown in Figures 11 to 13. In these drawings, like reference numbers indicate identical or functionally similar elements.

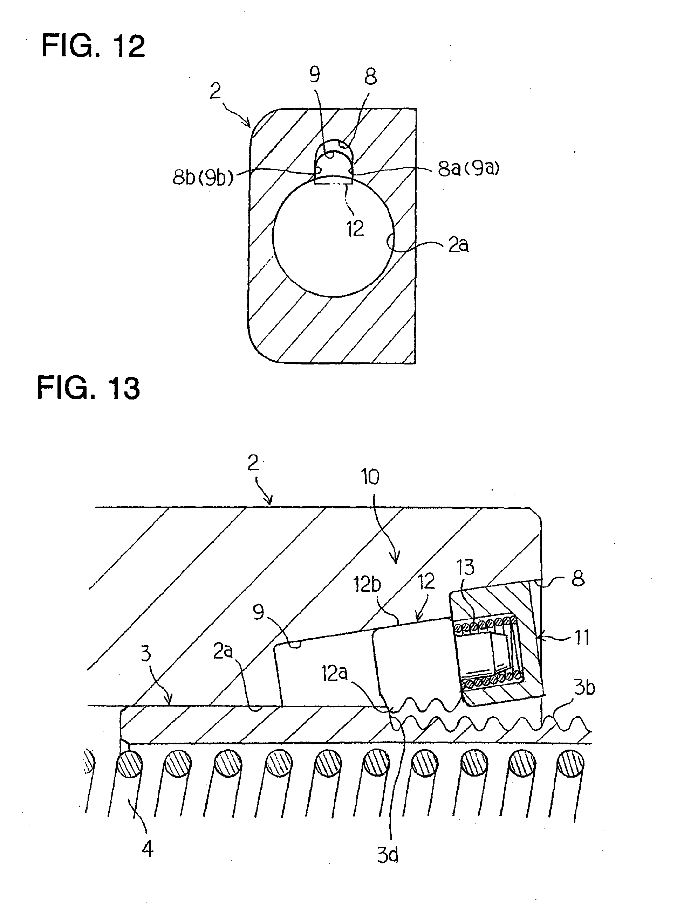

As shown in Figure 11, at the opening portion of the bore 2a of the housing 2 are formed recesses 8, 9 that adjoins and intersects the bore 2a. The recess 8 is positioned on the opening end side of the bore 2a, and the recess 9 is positioned at the back of the recess 8. A cross sectional shape of the recess 8, shown in Figure 12, is formed of a semicircular portion and flat portions 8a, 8b that are connected to the semicircular portion and disposed parallel to each other. Similarly, a cross sectional shape of the recess 9 is formed of a semicircular portion and flat portions 9a, 9b that are connected to the semicircular portion and disposed parallel to each other. In this example, a distance between the flat portions 8a and 8b is the same as that of the distance between the flat portions 9a and 9b. The flat portion 8a is flush with the flat portion 9a and the flat portion 8b is flush with the flat portion 9b. The distance between the flat portions 8a and 8b may be greater than that of the distance between the flat portions 9a and 9b.

A plug member 11 is press fit into the recess 8 and a slider 12 is provided in the recess 9. Between the plug member 11 and the slider 12 is provided a spring 13 as a second biasing member. The plug member 11, slider 12, and spring 13 form a ratchet mechanism 10 to prevent retraction of the plunger 3.

The slider 12 is a generally wedge-shaped member. The slider 12 has a ratchet portion 12a formed at a first side surface that is engageable with the rack teeth 3b of the outer circumference of the plunger and an inclined surface 12b formed at a second side surface opposite the first side surface. The inclined surface 12b is in slidable contact with the semicircular portion that acts as an inclined slide surface in the recess 9. Opposite side surfaces of the slider 12 is in contact with each flat portion 9a, 9b of the recess 9, shown in Figure 12. The slider 12 is thus prevented from swinging in the lateral direction in the recess 9, thereby maintaining the engagement of the ratchet portion 12a of the slider 12 with the rack teeth 3b of the plunger 3.

The slider 12 has an axial portion 12c. The plug member 11 has a hole 11a formed therein. One end of the spring 13 is engaged with the axial portion 12c of the slider 12 and the other end of the spring 13 is fitted into the hole 11a. The spring 13 biases the slider 12 in such a way that the ratchet portion 12a engages with the rack teeth 3b of the plunger 3. An axial centerline m of the spring 13 is preferably parallel to the centerline of the recess 9 and intersects the axial centerline L of the plunger 3 at an acute angle.

In such a manner, the ratchet mechanism 10 permits an outward movement of the plunger 3 in a protruding direction (or right-hand direction of Figure 11) and prevents retraction of the plunger 3 by exercising a wedge-effect between the outer circumference of the plunger 3 and the recess 9 at the time of retraction of the plunger 3.

The operation of the ratchet mechanism 10 is similar to that of the ratchet mechanism 7 of the above-mentioned embodiment, and it is not explained in detail here.

At the time of the maximum extension of the plunger 3, shown in Figure 13, a stop surface 3d formed at the outermost end of the rack teeth 3b of the plunger 3 comes into contact with the rear end of the ratchet portion 12a of the slider 12 and sandwiches the slider 12 with the plug 11. Thereby, further protrusion of the plunger 3 is restricted and thus, the plunger can be prevented from falling out of the tensioner.

In this case as well, similar to the above-mentioned embodiment, the rack teeth 3b is formed around the outer circumference of the plunger 3, thus eliminating the necessity for providing a rack member aside from the plunger 3 and reducing the number of components. Also, the slider 12 travels along the inclined slide surface of the recess 9, a sufficient backlash for the whole ratchet mechanism is acquired. Moreover, since the wedge-shaped slider 12 develops a wedge-effect between the slide surface of the recess 9 and the plunger 3 at the time of retraction of the plunger 3, the retraction of the plunger 3 can be securely prevented.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A hydraulic tensioner for applying tension to a chain comprising:
a housing having a central bore open at one end thereof;
a hollow plunger, slidably received in the bore of the housing, having an inside space forming a fluid chamber with the bore, the plunger having rack teeth at least at a portion of an outer circumferential surface thereof;
a first biasing member, biasing the plunger in a protruding direction;
a slider housing portion in a supporting block of the housing having an inclined slide surface;
a wedge-shaped slider within the slider housing portion having a first side surface with a ratchet portion adapted to engage with the rack teeth of the plunger and a second side surface, inclined relative to and disposed opposite the first side surface, the inclined surface of the slider being slidable along the inclined surface of the slider housing portion and in a direction crossing an axial centerline of the plunger, to prevent travel of the plunger in a backward direction by a wedge-effect;
a second biasing member in the slider housing portion biasing the slider in a direction of engagement of the ratchet portion of the slider with the rack teeth of the plunger;
wherein the rack teeth have a rear stop surface which, at maximum extension of the plunger contacts a rear end of the slider, so as to prevent the plunger from falling out of the tensioner; and
such that the second biasing member biases the slider in such a way that the slider moves along the inclined slide surface of the slider housing portion of the supporting block.

2. The hydraulic tensioner according to claim 1, wherein the slider housing portion has a rear stop surface adapted to contact a rear side surface of the slider to block travel of the slider in a backward direction.

3. The hydraulic tensioner according to claim 1 or 2, wherein the slider housing portion has a front facing wall oppositely disposed to a front side surface of the slider, and one end of the second biasing member contacts the front facing wall of the slider housing portion and the other end of the second biasing member contacts the front side surface of the slider.

4. The hydraulic tensioner according to claims 2 and 3, wherein the housing has a first through hole adapted to insert a disengaging pin thereinto between the rear side surface of the slider and the rear stop surface of the slider housing portion to disengage engagement of the ratchet portion of the slider with the rack teeth of the plunger, and the housing has a second through hole adapted to insert a retaining pin thereinto between the front side surface of the slider and the front facing wall of the slider housing portion to retain the plunger in a retracted state.

5. The hydraulic tensioner according to claim 4, wherein the disengaging pin and the retaining pin are the same pin having a tapered distal end.

6. A hydraulic tensioner for applying tension to a chain comprising:
a housing having a central bore open at one end thereof and a recess adjoining the central bore having an inclined slide surface opposing the bore;
a hollow plunger, slidably received in the bore of the housing, having an inside space forming a fluid chamber with the bore, the plunger having rack teeth at least at a portion of an outer circumferential surface thereof;
a first biasing member, biasing the plunger in a protruding direction;
a slider within the recess to prevent travel of the plunger in a backward direction by a wedge-effect having a first side surface having teeth for engaging the rack teeth of the plunger, and a second side surface, for sliding along the inclined surface of the recess in a direction crossing an axial centerline of the plunger; and
the slider being biased such that the slider moves along the inclined slide surface of the recess of the housing in a direction of engagement of the ratchet portion of the slider with the rack teeth of the plunger.

7. The hydraulic tensioner of claim 6, wherein the recess has a rear stop surface for contacting a rear side surface of the slider, to block travel of the slider in a backward direction.

8. The hydraulic tensioner of claim 6 or 7, wherein the recess has a plug member oppositely disposed to a front end surface of the slider, and the slider is biased by a second biasing member engaging the plug member and the front end surface of the slider.

9. The hydraulic tensioner of claim 6, 7 or 8, wherein the rack teeth have a rear stop surface, which at maximum extension of the plunger contacts a rear end of the slider, so as to prevent the plunger from falling out of the tensioner.

10. The hydraulic tensioner of any one of claims 6 to 10, wherein the recess has a pair of flat surfaces oppositely disposed to each other on opposite sides of the slide surface, the pair of flat surfaces slidably supporting the opposite side surfaces of the slider.
